# EUROPÄISCHE PATENTSCHRIFT

(11) **EP 1 000 091 B1**
(45) Veröffentlichungstag und Bekanntmachung des Hinweises auf die Patenterteilung: **03.04.2002**
(21) Anmeldenummer: 98944983.0
(22) Anmeldetag: 10.07.1998
(51) Int. Cl.: C08F 4/02, C08F 10/00

(54) **VERFAHREN ZUR HERSTELLUNG VON POLYETHYLEN MIT EINEM TITANAMID-KATALYSATOR UND DESSEN HERSTELLUNG**
METHOD FOR THE PRODUCTION OF POLYETHYLENE WITH A TITANIUM AMIDE CATALYST AND THE PRODUCTION THEREOF
PROCEDE POUR PREPARER DU POLYETHYLENE AVEC UN CATALYSEUR A L'AMIDE DE TITANE ET PROCEDE DE PREPARATION DUDIT CATALYSEUR

(30) Priorität: 31.07.1997 DE 19732963
(43) Veröffentlichungstag der Anmeldung: 17.05.2000
(73) Patentinhaber: Buna Sow Leuna Olefinverbund GmbH, 06258 Schkopau (DE)
(72) Erfinder: SCHELLENBERG, Jürgen, D-06132 Halle (DE); KERRINNES, Heinz-Jürgen, D-06128 Halle (DE); FRITZSCHE, Gerd, D-06217 Merseburg (DE); LOHSE, Gerd, D-06258 Schkopau (DE)
(86) Internationale Anmeldenummer: DE9801939
(87) Internationale Veröffentlichungsnummer: WO9906447

(56) Entgegenhaltungen:
- EP-A- 0 320 169
- DD-A- 282 013

## Beschreibung

Die Erfindung betrifft ein Verfahren zur Herstellung von Polyethylen durch Homo- oder Copolymerisation von Ethylen mit α-Olefinen in Gegenwart eines auf ein organisches Polymermaterial geträgerten Titanamid-Katalysators für die Fertigung von Formkörpem beispielsweise durch Extrusion, Spritzgießen, Folienblasen, Sinterpressen oder Ramextrusion.

Weiterhin betrifft die Erfindung einen auf einem organischen Polymermaterial geträgerten Titanamid- Katalysator und dessen Herstellung.

Es ist bekannt, daß metallorganische Katalysatoren zur Polymerisation von Ethylen auf der Grundlage von Titanamiden, die vor der Zugabe zum Polymerisationssystem mit aluminiumorganischen beziehungsweise magnesiumorganischen Verbindungen kontaktiert wurden, zu Polyethylenen führen, die Langkettenverzweigungen in den Polymermolekülen aufweisen (A Imai, H. Shiraishi, H. Jouhouji: Studies in Surface Science and Catalysis 92 (1995) 299 ff.).

Solche langkettenverzweigten Polyethylene zeichnen sich durch eine Reihe neuer und interessanter Eigenschaften aus. Hierzu gehört beispielsweise eine verbesserte Verarbeitbarkeit bei üblichen Schergeschwindigkeiten gegenüber herkömmlichen Polymeren bei gleicher Dichte und gleichem Schmelzindex infolge einer mit steigendem Langkettenverzweigungsgrad abnehmenden dynamischen Viskosität der Polymeren (A. Batistini: Macromol. Symp. 100 (1995) 137 ff.).

Für eine technisch effiziente Verwendung solcher spezifischer Katalysatoren zur Herstellung von Polyethylen ist häufig eine Fixierung der Katalysatorkomponenten auf geeigneten Trägermedien angezeigt. Hierzu sind verschiedene Verfahren bekannt, die sich spezieller anorganischer Träger als Trägermedien bedienen (EP 320 169).

Katalysatorsystemen auf der Grundlage solcher Trägermedien haftet jedoch der Nachteil an, daß sie zur Konditionierung einer Hochtemperaturbehandlung unterworfen werden müssen beziehungsweise zu Korrosionserscheinungen an den Polymerverarbeitungsmaschinen beispielsweise infolge noch verbliebener Restgehalte an Chlor in den hergestellten Polymerisaten führen sowie durch den Verbleib der anorganischen Trägermaterialien im Polymerisat zu unerwünschten Verarbeitungserscheinungen wie Stippen neigen.

Der Erfindung liegt deshalb die Aufgabe zugrunde, ein Verfahren zur Herstellung von Polyethylen durch Homo- oder Copolymerisation von Ethylen mit α-Olefinen in Gegenwart eines auf ein organisches Polymermaterial geträgerten Titanamid- Katalysators sowie einen auf einem organischen Polymermaterial geträgerten Titanamid-Katalysator zu entwickeln, die die genannten Nachteile nicht aufweisen und sich gleichzeitig durch eine hohe Polymerisationsaktivität, einen geringen Katalysatorrestgehalt und eine gute Farbe des Polymerisates sowie durch eine wirtschaftliche Herstellungsweise auszeichnen.

Erfindungsgemäß wird die Polymerisation zur Herstellung von Polyethylen durch Homo- oder Copolymerisation von Ethylen mit α-Olefinen durch
1. einen auf ein organisches Potymermaterial geträgerten Titanamid- Katalysator, enthaltend
   a) als organisches Polymermaterial ein teilweise chlormethyliertes Styrol-Divinylbenzol-Copolymerisat mit
      - einem Gehalt an Divinylbenzol von 1 bis 45 Masseprozent,
      - einem Chlorgehalt von 5 bis 23 Masseprozent,
      - einer spezifischen Oberfläche von 5 bis 1000 m²/g und
      - einer Korngröße von 50 bis 3000 µm,
   b) eine auf diesem organischen Polymermaterial geträgerte komplexe Verbindung der allgemeinen Formel

      (RₘMgX₂₋ₘ) · (RₙAlY₃₋ₙ)ₚ · (X_{q}TiL_{4-q}) · EDᵣ

      mit
      - R -: Alkyl-, Cycloalkyl-, Aryl-, Aralkyl-, Alkaryl-, Alkenyl-
      - X -: Halogen-
      - Y -: Wasserstoff-, Halogen-, Alkoxy-
      - L -: Dialkylamido-, Dicycloalkylamido-, Diarylamido-, Diaralkyl- amido-, Dialkarylamido- oder gemischt
      - ED -: als Elektronendonator wirksame organische Verbindungen wie lineare oder cyclische Ether, Thioether und andere
      - m -: 1 oder 2
      - n -: Zahlenwert von 1 bis 3
      - p -: Zahlenwert von 0,1 bis 1
      - q-: 0, 1, 2, oder 3
      - r -: Zahlenwert von 1 bis 2
   c) das Umsetzungsprodukt der auf dem organischen Polymermaterial geträgerten komplexen Verbindung von b) mit einem Gemisch aus
      A) einer Verbindung der allgemeinen Formel

         XₘTi Y₄₋ₘ

         mit
         - X, Y -: Halogen-, Alkyl-, Aryl-, Alkaryl-, Aralkyl-, Alkoxy-, Aroxy-
         - m -: 1, 2, 3 oder 4
         und
      B) einer Verbindung der allgemeinen Formel

         RₙCX₄₋ₙ

         mit
         - R -: Wasserstoff-, Alkyl-, Aryl-, Alkaryl-, Aralkyl-, Chlormethyl-, Dichlormethyl-, Trichlormethyl- oder partiell halogeniertes Alkyl-
         - X -: Halogen-, Alkyl-, Alkenyl-, Aryl-, Alkaryf-, Aralkyl-, Alkoxy-, Aroxy-
         - n -: 0, 1, 2 oder 3
         mit einem Molverhältnis der Verbindungen A) und B) im Bereich von 1:0,1 bis 1:2,
   wobei das Ausgangssubstrat für die auf dem organischen Polymermaterial geträgerte Verbindung unter b) durch intensives Vermahlen des organischen Polymermaterials mit der Übergangsmetallverbindung unterhalb der Glasübergangstemperatur des Polymers unter anaeroben Bedingungen gewonnen wird und

2. eine als Aktivator wirksame Verbindung der allgemeinen Formel

RₘAlY₃₋ₘ

mit
- R -: Alkyl-, Cycloalkyl-, Aryl-, Alkaryl-, Aralkyl-, Alkenyl-
- Y -: Wasserstoff-, Halogen-, Alkoxy-
- m -: Zahlenwert von 1 bis 3
ausgelöst.

Der Erfindung gemäß kann als organisches Polymermaterial ein teilweise chlormethyliertes Styrol-Divinylbenzol-Copolymerisat mit
- einem Gehalt an Divinylbenzol von 2 bis 25 Masseprozent,
- einem Chlorgehalt von 15 bis 22,5 Masseprozent,
- einer spezifischen Oberfläche von 10 bis 300 m²/g und
- einer Korngröße von 80 bis 2000 µm
eingesetzt werden.

Gemäß der Erfindung kann als die als Aktivator wirksame Verbindung Triisobutylaluminium verwendet werden.

Der Erfindung entsprechend kann als Übergangsmetallverbindung für das durch intensives Vermahlen mit dem organischen Polymermaterial erhaltene Ausgangssubstrat für die auf dem organischen Polymermaterial geträgerte Verbindung Tetrakis-(diethylamido)titan dienen.

Entsprechend der Erfindung kann das durch Homo- oder Copolymerisation von Ethylen mit α-Olefinen in Gegenwart eines auf ein organisches Polymermaterial geträgerten Titanamid-Katalysators hergestellte Polymerisat Viskositätszahlen von 150 bis 3000 ml/g aufweisen.

Erfindungsgemäß enthält der auf einem organischen Polymermaterial geträgerte Titanamid-Katalysator
a) als organisches Polymermaterial ein teilweise chlormethyliertes Styrol-Divinylbenzol-Copolymerisat mit
   - einem Gehalt an Divinylbenzol von 1 bis 45 Masseprozent,
   - einem Chlorgehalt von 5 bis 23 Masseprozent,
   - einer spezifischen Oberfläche von 5 bis 1000 m²/g und
   - einer Korngröße von 50 bis 3000 µm,
b) eine auf diesem organischen Polymermaterial geträgerte komplexe Verbindung der allgemeinen Formel

   (RₘMgX₂₋ₘ) · (RₙAlY₃₋ₙ)ₚ · (X_{q}TiL_{4-q}) · EDᵣ

   mit
   - R -: Alkyl-, Cycloalkyl-, Aryl-, Aralkyl-, Alkaryl-, Alkenyl-
   - X -: Halogen-
   - Y -: Wasserstoff-, Halogen-, Alkoxy-
   - L -: Dialkylamido-, Dicycloalkylamido-, Diarylamido-, Diaralkylamido-, Dialkarylamido- oder gemischt
   - ED -: als Elektronendonator wirksame organische Verbindungen wie lineare oder cyclische Ether, Thioether und andere
   - m -: 1 oder 2
   - n -: Zahlenwert von 1 bis 3
   - p -: Zahlenwert von 0,1 bis 1
   - q -: 0, 1, 2, oder 3
   - r -: Zahlenwert von 1 bis 2
- c) das Umsetzungsprodukt der auf dem organischen Polymermaterial geträgerten komplexen Verbindung von b) mit einem Gemisch aus
   A) einer Verbindung der allgemeinen Formel

      XₘTi Y₄₋ₘ

      mit
      - X, Y -: Halogen-, Alkyl-, Aryl-, Alkaryl-, Aralkyl-, Alkoxy-, Aro
      - m -: 1, 2, 3 oder 4
      und
   B) einer Verbindung der allgemeinen Formel

      RₙCX₄₋ₙ

      mit
      - R -: Wasserstoff-, Alkyl-, Aryl-, Alkaryl-, Aralkyl-, Chlormethyl-, Dichlormethyl-, Trichlormethyl- oder partiell halogeniertes Alkyl-
      - X -: Halogen-, Alkyl-, Alkenyl-, Aryl-, Alkaryl-, Aralkyl-, Alkoxy-, Aroxy-
      - n -: 0, 1, 2 oder 3
   mit einem Molverhältnis der Verbindungen A) und B) im Bereich von 1:0,1 bis 1:2,
wobei
- das Ausgangssubstrat für die auf dem organischen Polymermaterial geträgerte Verbindung unter b) durch intensives Vermahlen des organischen Polymermaterials mit der Übergangsmetallverbindung unterhalb der Glasübergangstemperatur des Polymers unter anaeroben Bedingungen gewonnen wird und
- der auf einem organischen Polymermaterial geträgerte Titanamid-Katalysator mit einer Verbindung der allgemeinen Formel

   RₘAlY₃₋ₘ

   mit
   - R -: Alkyl-, Cycloalkyl-, Aryl-, Alkaryl-, Aralkyl-, Alkenyl-
   - Y -: Wasserstoff-, Halogen-, Alkoxy-
   - m -: Zahlenwert von 1 bis 3
   aktiviert wird.

Die Herstellung dieses Katalysators kann der Erfindung entsprechend aus den in Anspruch 6 aufgeführten Komponenten durch Umsetzung in der dort angegebenen Reihenfolge erfolgen.

Nachfolgend soll die Erfindung an einigen ausgewählten Ausführungsbeispielen näher erläutert werden.

### Beispiel 1

### Herstellung des geträgerten Titanamid-Katalysators

In einem Gemisch aus 32,1 ml getrocknetem Hexan und 1,77 ml getrocknetem Tetrahydrofuran wurden unter anaeroben Bedingungen 0,394 g Magnesiumspäne dispergiert und gegebenenfalls mit einer Spur Jod am Rückfluß unter Rühren mit über einen Zeitraum von ca. 13 min tropfenweise zugegebenen 2,22 ml destilliertem n-Butylchlorid unter Sieden zur Reaktion gebracht. Nach weiteren 9,25 Stunden Kochen am Rückfluß waren die Magnesiumspäne vollständig aufgelöst und die Bildung der magnesiumorganischen Verbindung abgeschlossen. Jetzt wurde in die siedende Suspension im Verlauf von 35 min 17,5 ml Triisobutylaluminium in Form einer 5 %igen Lösung in Hexan zugetropft und noch eine weitere Stunde unter Rühren am Rückfluß erhitzt. In diese Suspension wurden bei Raumtemperatur 3,13 g eines durch anaerobes intensives Vermahlen in einem Syalonbecher mittels einer Planetenmikromühle hergestellten Gemisches aus 25 Masseprozent Tetrakis-(diethylamido)titan und 75 Masseprozent eines teilweise chlormethylierten Styrol-Divinylbenzol-Copolymerisates mit
- einem Gehalt an Divinylbenzol von 5,5 Masseprozent,
- einem Chlorgehalt von 21,6 Masseprozent,
- einer spezifischen Oberfläche von 55 m³/g und
- einer Korngröße von 300 bis 1200 µm
eingetragen. Anschließend wurde unter Kühlung ein Gemisch aus 0,44 ml 1,2-Dichlorethan, 12 ml Hexan und 0,25 ml Titantetrachlorid zugetropft und noch 1 Stunde in der Siedehitze belassen.

Die somit erhaltene braune Suspension des Titanamid-Katalysators enthielt ca. 0,98 mg Titan je ml Suspension.

### Beispiel 2

### Polymerisation mit dem geträgerten Titanamid-Katalysator

In einem sekurierten und mit Ethylen gespülten Rührautoklav wurden entsprechend den Angaben der Tabelle 1 das das Triisobutylaluminium als Aktivator enthaltende Hexan vorgelegt, die entsprechende Menge der in Beispiel 1 hergestellten Suspension des Titanamid-Katalysators als Hexan-Verdünnung hinzugegeben sowie zwei bar Ethylen aufgedrückt. Nach dem schnellen Erwärmen auf die Polymerisationstemperatur von 85 °C unter intensivem Rühren wurde der Ethylendruck entsprechend dem in Tabelle 1 angegebenen Wert endgültig eingestellt und durch kontinuierliches Nachdosieren des verbrauchten Monomeren über den Polymerisationszeitraum von zwei Stunden konstant gehalten. Anschließend wurde zur Beendigung des Versuches die Nachdosierung unterbrochen, der Reaktorinhalt abgekühlt, entspannt und das Polyethylen abfiltriert und getrocknet.

Die Ergebnisse der Polymerisation sowie die Eigenschaften des erhaltenen Polyethylens sind in der Tabelle 2 aufgeführt. Der Versuch belegt die Möglichkeit, mit dem erfindungsgemäßen Katalysator ein Polymer mit ausgezeichneten morphologischen Eigenschaften, beispielsweise einer hohen Schüttdichte, bei einer sehr hohen Viskositätszahl und damit Molmasse zu erhalten. Das Produkt zeichnet sich weiterhin durch eine sehr gute Eigenfarbe, ersichtlich aus einem hohen Wert der Farbzahl Cᵥ aus und kann mit einer sehr hohen Katalysatorausbeute hergestellt werden. Der Katalysator selbst kann in einfacher Verfahrensweise ohne Hochtemperaturbehandlung und ohne mehrfache Separation inerter Reaktionsmedien als Suspension oder deren Verdünnung hergestellt und eingesetzt werden.

### Beispiel 3

### Polymerisation mit dem geträgerten Titanamid-Katalysator

Für die Polymerisation unter Verwendung des gemäß Beispiel 1 erhaltenen geträgerten Titanamid-Katalysators wurde gleichfalls die in Beispiel 2 beschriebene Vorgehensweise gewählt. Die eingesetzten Mengen an Katalysatorsuspension und Aktivator sowie Lösungsmittel und der eingestellt Partialdruck an Ethylen gehen aus der Tabelle 1 hervor.

Polymerisationsergebnisse und Eigenschaften des hergestellten Polyethylens enthält die Tabelle 2. Es ist ersichtlich, daß sich der erfindungsgemäße Titanamid-Katalysator durch eine hohe Polymerisationsaktivität auszeichnet. Dieser Katalysator kann in einfacher Verfahrensweise ohne Hochtemperaturbehandlung und mehrfache Separation inerter Reaktionsmedien hergestellt und eingesetzt werden, ohne teure Cokatalysatoren wie beispielsweise Methylalumoxane verwenden zu müssen. Das Polymerisat selbst weist insbesondere eine hohe Molmasse, eine hohe Schüttdichte und eine sehr gute Eigenfarbe auf. Weiterhin zeichnet sich das Polymerisat durch einen geringen Asche- und Katalysatorrestgehalt und durch eine ausreichend hohe Temperatur des Oxidationsmaximums aus.

### Beispiel 4

### Polymerisation mit dem geträgerten Titanamid-Katalysator

In diesem Beispiel wurde bei der Polymerisation mit dem unter Beispiel 1 hergestellten Katalysator nach den Angaben des Beispiels 2 und der Tabelle 1 verfahren. Die Eigenschaften des auf diese Weise hergestellten Polyethylens sowie die Ergebnisse der Polymerisation sind im Vergleich zu den Beispielen 2 und 3 ebenfalls in der Tabelle 2 aufgeführt.

Auch dieses Polymerisat zeichnet sich durch sehr gute morphologische Eigenschaften wie Schüttdichte und Korngröße, eine sehr hohe Viskositätszahl und damit Molmasse sowie durch eine gute Farbzahl aus, was die hervorragenden optischen Eigenschaften der erfindungsgemäß hergestellten Polymerisate bestätigt.

### Beispiel 5

### Polymerisation mit dem geträgerten Titanamid-Katalysator

Die Polymerisation wurde gemäß Beispiel 2 und Tabelle 1 durchgeführt. Jedoch wurde in diesem Beispiel in Gegenwart von Wasserstoff gearbeitet, dessen Partikeldruck nach dem Aufdrücken der ersten Teilmenge Ethylen bei Raumtemperatur eingestellt wurde.

In der Tabelle 2 sind die Polymerisationsergebnisse und die Eigenschaften des erhaltenen Polyethylens zusammengefaßt. Die über den Einsatz von Wasserstoff erzielte niedrigere Viskositätszahl des Polymerisates belegt die hohe Flexibilität des Titanamid-Katalysator bei der Einstellung der Produkteigenschaften insbesondere des Fließverhaltens und der Molmassenparameter.

**Tabelle 1**

| Angaben zu den Polymerisationsbedingungen | | | | |
|---|---|---|---|---|
| Beispiele | 2 | 3 | 4 | 5 |
| Katalysatorsuspension | | | | |
| eingesetzte Titanmenge | 0,148 | 0,148 | 0,148 | 0,148 |
| [mg] | | | | |
| [mg/l] | 0,211 | 0,211 | 0,211 | 0,211 |
| Aktivatormenge | | | | |
| (Triisobutylaluminium) | | | | |
| | 1,4 | 1,4 | 1,4 | 1,4 |
| [mmol] | | | | |
| | 2,0 | 2,0 | 2,0 | 2,0 |
| [mmol/l] | | | | |
| Molverhältnis Al:Ti | 452:1 | 452:1 | 452:1 | 452:1 |
| Gesamtmenge Hexan [ml] | 700 | 700 | 700 | 700 |
| Gesamtdruck [bar] | 6,0 | 7,0 | 5,0 | 7,0 |
| Partialdruck Ethylen [bar] | 4,7 | 5,7 | 3,7 | 4,7 |
| Partialdruck Wasserstoff [bar] | - | - | - | 1,0 |

**Tabelle 2**

| Polymerisationsergebnisse und Eigenschaften der mit dem Titanamid-Katalysator hergestellten Polyethylene | | | | | |
|---|---|---|---|---|---|
| Eigenschaften | Maßeinheit | Beispiel 2 | Beispiel 3 | Beispiel 4 | Beispiel 5 |
| **Polymerisationsergebnisse** | | | | | |
| Polymerausbeute | g | 198,5 | 249,8 | 148,8 | 69,7 |
| Katalysatorausbeute | kg PE/g Ti | 1337 | 1682 | 1002 | 469 |
| Katalysatorausbeute | kg PE/mmol Ti | 64,0 | 80,6 | 48,0 | 22,5 |

| **Eigenschaften des Polyethylens** | | | | | |
|---|---|---|---|---|---|
| Schüttdichte (DIN 53468) | g/l | 310 | 317 | 309 | 295 |
| Dichte (ISO 1183) | g/cm³ | 0,938 | 0,939 | 0,939 | - |
| Viskositätszahl (ISO 1191) | cm³/g | 1710 | 1465 | 1690 | 270 |
| Farbzahl Cv (Hunter-Lab) | | 114,0 | 116,9 | 113,6 | - |
| Schmelzindex (190°C, 10 kg) (ISO1133) | g/10 min | - | - | - | 1,77 |
| Molmasse (SEC) | | | | | |
| M_{w} | g/mol | - | - | - | 205 000 |
| Mₙ | g/mol | - | - | - | 38 200 |

| **Korngrößenverteilung** | | | | | |
|---|---|---|---|---|---|
| mittlere Korngröße | µm | 423 | - | 417 | 438 |
| Korngrößenbereich | µm | ∼30-1000 | - | ∼30-1000 | ∼30-1200 |

| **Katalysatorrestgehalt im Polymeren** | | | | | |
|---|---|---|---|---|---|
| Ti | ppm wt | 2,2 | 1,5 | 1,1 | - |
| Al | ppm wt | 120 | 110 | 130 | - |
| Asche | ppm wt | 300 | 245 | 290 | 620 |
| | | | | | |
| Temperatur des Schmelzmaximums (DTA) | °C | 142,6 | 142,6 | 142,2 | 129,5 |

## Patentansprüche

1. Verfahren zur Herstellung von Polyethylen durch Homo- oder Copolymerisation von Ethylen mit α-Olefinen in Gegenwart eines auf ein organisches Polymermaterial geträgerten Titanamid- Katalysators, **dadurch gekennzeichnet, daß** die Polymerisation durch
1. einen auf ein organisches Polymermaterial geträgerten Titanamid-Katalysator, enthaltend
a) als organisches Polymermaterial ein teilweise chlormethyliertes Styrol-Divinylbenzol-Copolymerisat mit
- einem Gehalt an Divinylbenzol von 1 bis 45 Masseprozent,
- einem Chlorgehalt von 5 bis 23 Masseprozent,
- einer spezifischen Oberfläche von 5 bis 1000 m²/g und
- einer Korngröße von 50 bis 3000 µm,
b) eine auf diesem organischen Polymermaterial geträgerte komplexe Verbindung der allgemeinen Formel
(RₘM_{g}X₂₋ₘ) · (RₙAlY₃₋ₙ)ₚ · (X_{q}TiL_{4-q}) · EDᵣ
mit
R - Alkyl-, Cycloalkyl-, Aryl-, Aralkyl-, Alkaryl-, Alkenyl-
X - Halogen-
Y - Wasserstoff-, Halogen-, Alkoxy-
L - Dialkylamido-, Dicycloalkylamido-, Diarylamido-, Diaralkyla- mido-, Dialkarylamido- oder gemischt
ED - als Elektronendonator wirksame organische Verbindungen wie lineare oder cyclische Ether, Thioether und andere
m - 1 oder 2
n - Zahlenwert von 1 bis 3
p - Zahlenwert von 0,1 bis 1
q - 0, 1, 2, oder 3
r - Zahlenwert von 1 bis 2
c) das Umsetzungsprodukt der auf dem organischen Polymermaterial geträgerten komplexen Verbindung von b) mit einem Gemisch aus
A) einer Verbindung der allgemeinen Formel
XₘTi Y₄₋ₘ
mit
X, Y - Halogen-, Alkyl-, Aryl-, Alkaryl-, Aralkyl-, Alkoxy-, Aroxy-
m - 1, 2, 3 oder 4
und
B) einer Verbindung der allgemeinen Formel
RₙCX₄₋ₙ
mit
R - Wasserstoff-, Alkyl-, Aryl-, Alkaryl-, Aralkyl-, Chlormethyl-, Dichlormethyl-, Trichlormethyl- oder partiell halogeniertes Alkyl-
X - Halogen-, Alkyl-, Alkenyl-, Aryl-, Alkaryl-, Aralkyl-, Alkoxy-, Aroxy-
n - 0, 1, 2 oder 3
mit einem Molverhältnis der Verbindungen A) und B) im Bereich von 1:0,1 bis 1:2,
wobei das Ausgangssubstrat für die auf dem organischen Polymermaterial geträgerte Verbindung unter b) durch intensives Vermahlen des organischen Polymermaterials mit der Übergangsmetallverbindung unterhalb der Glasübergangstemperatur des Polymers unter anaeroben Bedingungen gewonnen wird und
2. eine als Aktivator wirksame Verbindung der allgemeinen Formel
RₘAlY₃₋ₘ
mit
R - Alkyl-, Cycloalkyl-, Aryl-, Alkaryl-, Aralkyl-, Alkenyl-
Y - Wasserstoff-, Halogen-, Alkoxy-
m - Zahlenwert von 1 bis 3
ausgelöst wird.

2. Verfahren nach Anspruch 1, **dadurch gekennzeichnet, daß** als organisches Polymermaterial ein teilweise chlormethyliertes Styrol-Divinylbenzol-Copolymerisat mit
- einem Gehalt an Divinylbenzol von 2 bis 25 Masseprozent,
- einem Chlorgehalt von 15 bis 22,5 Masseprozent,
- einer spezifischen Oberfläche von 10 bis 300 m²/g und
- einer Korngröße von 80 bis 2000 µm
eingesetzt wird.

3. Verfahren nach den Ansprüchen 1 bis 2, **dadurch gekennzeichnet, daß** die als Aktivator wirksame Verbindung Triisobutylaluminium ist.

4. Verfahren nach den Ansprüchen 1 bis 3, **dadurch gekennzeichnet, daß** als Übergangsmetallverbindung für das durch intensives Vermahlen mit dem organischen Polymermaterial erhaltene Ausgangssubstrat für die auf dem organischen Polymermaterial geträgerte Verbindung Tetrakis(diethylamido)-titan dient.

5. Verfahren nach den Ansprüchen 1 bis 4, **dadurch gekennzeichnet, daß** das durch Homo- oder Copolymerisation von Ethylen mit α-Olefinen in Gegenwart eines auf ein organisches Polymermaterial geträgerten Titanamid- Katalysators hergestellte Polymerisat Viskositätszahlen von 150 bis 3000 ml/g aufweist.

6. Auf einem organischen Polymermaterial geträgerter Titanamid- Katalysator enthaltend
a) als organisches Polymermaterial ein teilweise chlormethyliertes Styrol-Divinylbenzol-Copolymerisat mit
- einem Gehalt an Divinylbenzol von 1 bis 45 Masseprozent,
- einem Chlorgehalt von 5 bis 23 Masseprozent,
- einer spezifischen Oberfläche von 5 bis 1000 m²/g und
- einer Korngröße von 50 bis 3000 µm,
b) eine auf diesem organischen Polymermaterial geträgerte komplexe Verbindung der allgemeinen Formel
(RₘMgX₂₋ₘ)·(RₙAlY₃₋ₙ)ₚ·(X_{q}TiL_{4-q})·EDᵣ
mit
R - Alkyl-, Cycloalkyl-, Aryl-, Aralkyl-, Alkaryl-, Alkenyl-
X - Halogen-
Y - Wasserstoff-, Halogen-, Alkoxy-
L - Dialkylamido-, Dicycloalkylamido-, Diarylamido-, Diaralkylamido, Dialkarylamido- oder gemischt
ED - als Elektronendonator wirksame organische Verbindungen wie lineare oder cyclische Ether, Thioether und andere
m - 1 oder 2
n - Zahlenwert von 1 bis 3
p - Zahlenwert von 0,1 bis 1
q- 0, 1, 2, oder 3
r - Zahlenwert von 1 bis 2
c) das Umsetzungsprodukt der auf dem organischen Polymermaterial geträgerten komplexen Verbindung von b) mit einem Gemisch aus
A) einer Verbindung der allgemeinen Formel
XₘTi Y₄₋ₘ
mit
X, Y - Halogen-, Alkyl-, Aryl-, Alkaryl-, Aralkyl-, Alkoxy-, Aroxy-
m- 1, 2, 3 oder 4
und
B) einer Verbindung der allgemeinen Formel
RₙCX₄₋ₙ
mit
R - Wasserstoff-, Alkyl-, Aryl-, Alkaryl-, Aralkyl-, Chlormethyl-, Dichlormethyl-, Trichlormethyl- oder partiell halogeniertes Alkyl-
X - Halogen-, Alkyl-, Alkenyl-, Aryl-, Alkaryl-, Aralkyl-, Alkoxy-, Aroxy-
n - 0, 1, 2 oder 3
mit einem Molverhältnis der Verbindungen A) und B) im Bereich von 1:0,1 bis 1:2,
wobei
- das Ausgangssubstrat für die auf dem organischen Polymermaterial geträgerte Verbindung unter b) durch intensives Vermahlen des organischen Polymermaterials mit der Übergangsmetallverbindung unterhalb der Glasübergangstemperatur des Polymers unter anaeroben Bedingungen gewonnen wird und
- der auf einem organischen Polymermaterial geträgerte Titanamid-Katalysator mit einer Verbindung der allgemeinen Formel
RₘAlY₃₋ₘ
mit
R - Alkyl-, Cycloalkyl-, Aryl-, Alkaryl-, Aralkyl-, Alkenyl-
Y - Wasserstoff-, Halogen-, Alkoxy-
m - Zahlenwert von 1 bis 3
aktiviert wird.

7. Katalysator nach Anspruch 6, **dadurch gekennzeichnet, daß** die Herstellung dieses Katalysators aus den in Anspruch 6 aufgeführten Komponenten durch Umsetzung in der dort angegebenen Reihenfolge erfolgt.

## Claims

1. A process to produce polyethylene through homopolymerization or copolymerization of ethylene with alpha-olefins in the presence of a titanium amide catalyst on an organic polymeric material carrier, whereby polymerization is initiated through
1. a titanium amide catalyst on an organic polymeric material carrier, containing
a) a partially chloromethylated styrene-divinyl-benzene copolymer as said organic polymeric material, with
- a divinyl benzene concentration of 1 through 45 percent by weight;
- a chlorine content of 5 through 23 percent by weight;
- a specific surface area of 5 through 1,000 m ²/g; and
- a grain size of 50 through 3,000 µm;
b) a complex compound on said organic polymeric material carrier, with the general formula of
(RₘMgX₂₋ₘ).(RₙAIY₃₋ₙ)ₚ.(X_{q}TiL_{4-q}).EDᵣ
whereby:
R - alkyl-, cycloalkyl-, aryl-, aralkyl-, alkaryl-, alkenyl-
X - halogen-
Y - hydrogen-, halogen-, alkoxy-
L - dialkylamido-, dicycloalkylamido-, diarylamido-, diaralkylamido-, dialkarylamido-, or a mixture thereof
ED - organic compound acting as an electron donor, such as linear or cyclic ethers, thioethers or others
m - 1 or 2
n - any numerical value from 1 to 3
p - any numerical value from 0.1 to 1
q - 0, 1, 2 or 3
r - any numerical value from 1 to 2
c) a conversion product of the complex compound on an organic polymeric material carrier mentioned at b) above, with a mixture of
A) a compound with the general formula of
XₘTiY₄₋ₘ
whereby:
X, Y - halogen-, alkyl-, aryl-, alkaryl-, aralkyl-, alkoxy-, aroxy-
m- 1, 2, 3 or 4
and
B) a compound with the general formula of
RₙCX₄₋ₙ
whereby:
R - hydrogen-, alkyl-, aryl-, alkaryl-, aralkyl-, chloromethyl-, dichloromethyl-, trichloromethyl-, or partially halogenated alkyl-
X - halogen-, alkyl-, alkenyl-, aryl-, alkaryl-, aralkyl-, alkoxy-, aroxy-
n- 0, 1, 2 or 3
in a molar ratio between compounds A) and B) in the range from 1:0.1 to 1:2
whereby the starting substrate for the compound on the organic polymeric material carrier as mentioned at b) above is produced through intensive grinding of said organic polymeric material with the transitional metal compound at a temperature below the glass transition temperature of the polymer under anaerobic conditions; and
2. a compound acting as an activator, of the general formula of
RₘAIY₃₋ₘ
whereby:
R - alkyl-, cycloalkyl-, aryl-, alkaryl-, aralkyl-, alkenyl-,
Y - hydrogen-, halogen-, alkoxy-
m - any numerical value between 1 and 3.

2. A process according to claim 1 above, whereby a partially chloromethylated styrene-divinyl benzene copolymer with
- a divinyl benzene content of 2 through 25 percent by weight
- a chlorine content of 15 through 22.5 percent by weight
- a specific surface area of 10 through 300 m²/g, and
- a grain size of 80 through 2,000µm
is used as said organic polymeric material.

3. A process according to claims 1 through 2 above, whereby triisobutyl aluminum is used as said compound acting as an activator.

4. A process according to claims 1 through 3 above, whereby Tetrakis(diethylamido)titanium is used as the transitional metal compound for the starting substrate for the compound on the organic polymeric carrier, which is produced through intensive grinding with the organic polymeric compound.

5. A process according to claims 1 through 4 above, whereby the polymer produced through homopolymerization or copolymerization of ethylene with alpha-olefins in the presence of a titanium amide catalyst on an organic polymeric carrier has a viscosity number between 150 and 3,000 ml/g.

6. A titanium amide catalyst on an organic polymeric carrier, containing:
a) a partially chloromethylated styrene-divinyl benzene copolymer as said organic polymeric material, with
- a divinyl benzene content of 1 through 45 percent by weight;
- a chlorine content of 5 through 23 percent by weight;
- a specific surface area of 5 through 1,000 m²/g, and
- a grain size of 50 through 3,000 µm;
b) a complex compound on said organic polymeric carrier, of the general formula of
(RₘMgX₂₋ₘ) · (RₙAIY₃₋ₙ)ₚ · (X_{q}TiL_{4-q}) · EDᵣ
whereby:
R - alkyl-, cycloalkyl-, aryl-, aralkyl-, alkaryl-, alkenyl-
X - halogen-
Y - hydrogen-, halogen-, alkoxy-
L - dialkylamido-, dicycloalkylamido-, diarylamido-, diaralkylamido-, dialkarylamido-, or a mixture thereof
ED - organic compound acting as an electron donor such as linear or cyclic ethers, thioethers, or others
m - 1 or 2
n - any numerical value from 1 to 3
p - any numerical value from 01. to 1
q - 0,1, 2 or 3
r - any numerical value from 1 to 2
c) the conversion product of the complex compound on the organic polymeric carrier mentioned at b) above, with a mixture of:
A) a compound of the general formula of
XₘTIY₄₋ₘ
whereby:
X, Y - halogen-, alkyl-, aryl-, alkaryl-, aralkyl-, alkoxy-, aroxy-
m - 1, 2, 3 or 4
and
B) a compound of the general formula of
RₙCX₄₋ₙ
whereby:
R - hydrogen-, alkyl-, aryl-, alkaryl-, aralkyl-, chloromethyl-, dichloromethyl-, trichloromethyl- or partially halogenated alkyl-
X - halogen-, alkyl-, alkenyl-, aryl-, alkaryl-, aralkyl-, alkoxy-, aroxy-
n- 0, 1, 2 or 3
in a molar ratio between compounds A) and B) in the range between 1:0.1 and 1:2,
whereby:
- the starting substrate for the compound on the organic polymeric carrier mentioned at b) is produced through intensive grinding of the organic polymeric material with the transitional metal compound at a temperature below the glass transition temperature of the polymer under anaerobic conditions; and
- the titanium amide catalyst on the organic polymeric carrier is activated through a compound with the general formula of
RₘAIY₃₋ₘ
whereby:
R - alkyl-, cycloalkyl-, aryl-, alkaryl-, aralkyl-, alkenyl-
Y - hydrogen-, halogen-, alkoxy-
m - any numerical value from 1 to 3.

7. A catalyst according to claim 6 above, whereby said catalyst is produced through conversion of the components mentioned in claim 6 in the order mentioned in said claim.

## Revendications

1. Procédé de fabrication de polyéthylène par homopolymérisation et copolymérisation d'éthylène avec des oléfines V en présence d'un calatyseur à l'amide de titane sur support en matière organique de polymère, **caractérisé par le fait que** la polymérisation est déclenchée par
1. un catalysateur à l'amide de titane sur support en matière organique de polymère contenant
a) comme matière organique de polymère un copolymère au styrène-divinylbenzène en partie chlorméthylé avec
une teneur en divinylbenzène de 1 à 45 pour cent en poids,
une teneur en chlore de 5 à 23 pour cent en poids,
une surface spécifique de 5 à 1000 m²/g et
une granulimétrie de 50 à 3000 µm,
b) un composé complexe supporté sur cette matière organique au polymère de la formule générale
(RₘMgX₂₋ₘ).(RₙAIY₃₋ₙ)ₚ.(X_{q}TiL_{4-q}).EDᵣ
avec
R - alkyle-, cycloalkyle-, aryle-, aralkyle-, alkaryle-, alkényle-
X - halogène-
Y - hydrogène-, halogène-, alkoxy-
L - dialkylamido-, dicycloalkylamido-, diarylamido, diaralkylamido-, dialkarylamido- ou mélangés
ED - composés organiques efficaces comme donneurs d'électrons tels que les thioéthers et éthers linéaires ou cycliques et d'autres
m - 1 ou 2
n - valeur numérique de 1 à 3
p - valeur numérique de 0,1 à 1
q - 0,1, 2 ou 3
r - valeur numérique de 1 à 2
c) le produit de transformation du composé complexe de b) supporté sur la matière organique de polymère avec un mélange
A) d'un composé de la formule générale
XₘTi Y₄₋ₘ
avec
X, Y - halogène-, alkyle-, aryle-, alkaryle, aralkyle, alkoxy-, aroxy-
m - 1, 2, 3 ou 4
et
B) un composé de la formule générale
RₙCX₄₋ₙ
avec
R- hydrogène-, alkyle-, aryle-, alkaryle-, aralkyle-, chlorométhyle-, dichlorométhyle-, trichlorométhyle ou alkyle- partiellement halogéné
X - halogène-, alkyle-, alkényle-, aryle-, alkaryle-, aralkyle alkoxy-, aroxy-
n - 0, 1, 2 ou 3
avec un rapport molaire des composés A) et B) dans une gamme de 1:0,1 à 1:2 le substrat de départ étant obtenu pour le composé supporté sur la matière organique de polymère sous b) par un broyage profond de la matière organique de polymère avec le composé métallique de transition en dessous de la température de transition vitreuse du polymère sous conditions anaérobies et
2. un composé efficace comme activateur de la formule générale
RₘAIY₃₋ₘ
avec
R - alkyle-, cycloalkyle-, aryle-, alkarale-, aralkyle-, alkényle
Y - hydrogène-, halogène-, alkoxy-
m - valeur numérique de 1 à 3

2. Procédé selon la revendication 1 **caractérisé par le fait qu'**est employé comme matière organique de polymère un copolymère au styrène-divinylbenzène en partie chlorméthylé avec
- une teneur en divinylbenzène de 2 à 25 pour cent en poids,
- une teneur en chlore de 15 à 22,5 pour cent en poids,
- une surface spécifique de 10 à 300 m²/g et
- une granulimétrie de 80 à 2000 µm.

3. Procédé selon les revendications de 1 à 2 **caractérisé par le fait que** le composé utilisé comme activateur efficace est du triisobitylaluminium.

4. Procédé selon les revendications de 1 à 3 **caractérisé par le fait que** l'on se sert de tétrakis(diéthylamido)- titane comme composé métallique de transition pour le substrat de départ obtenu par broyage profond avec la matière organique de polymère pour le composé supporté sur la matière organique de polymère.

5. Procédé selon les revendications de 1 à 4 **caractérisé par le fait que** le polymère produit par l'homopolymérisation et la copolymérisation de l'éthylène avec des oléfines V en présence d'un catalyseur à l'amide de titane supporté sur une matière organique de polymère présente des indices de viscosité de 150 à 3000 ml/g.

6. Un catalysateur à l'amide de titane supporté sur une matière organique de polymère contenant
a) comme matière organique de polymère un copolymère au styrène-divinylbenzène en partie chlorméthylé avec
une teneur en divinylbenzène de 1 à 45 pour cent en poids,
une teneur en chlore de 5 à 23 pour cent en poids,
une surface spécifique de 5 à 1000 m²/g et
une granulimétrie de 50 à 3000 µm,
b) un composé complexe supporté sur cette matière organique au polymère de la formule générale
(RₘMgX₂₋ₘ)·(RₙAIY₃₋ₙ)ₚ·(X_{q}TiL_{4-q})·EDᵣ
avec
R - alkyle-, cycloalkyle-. aryle- aralkyle- alkaryle-, alkényle-
X - halogène-
Y - hydrogène-, halogène-, alkoxy-
L - dialkylamido-, dicycloalkylamido-, diarylamido, diaralkylamido-, dialkarylamido- ou mélangés
ED - composés organiques efficaces comme donneurs d'électrons tels que les thioéthers et éthers linéaires ou cycliques et d'autres
m - 1 ou 2
n - valeur numérique de 1 à 3
p - valeur numérique de 0,1 à 1
q - 0, 1, 2 ou 3
r - valeur numérique de 1 à 2
c) le produit de transformation du composé complexe de b) supporté sur la matière organique de polymère avec un mélange
A) d'un composé de la formule générale
XₘTi X₄₋ₘ
avec
X, Y - halogène-, alkyle-, aryle-, alkaryle, aralkyle, alkoxy-, aroxy-
m - 1,2,3 ou 4
et
B) un composé de la formule générale
RₙCX₄₋ₙ
avec
R- hydrogène-, alkyle-, aryle-, alkaryle-, aralkyle-, chlorométhyle-, dichlorométhyle-, trichlorométhyle ou alkyle- partiellement halogéné
X - halogène-, alkyle-, alkényle-, aryle-, alkaryle-, aralkyle alkoxy-, aroxy-
n - 0, 1, 2 ou 3
avec un rapport molaire des composés A) et B) dans une gamme de 1:0,1 à 1:2
- le substrat de départ étant obtenu pour le composé supporté sur la matière organique de polymère sous b) par un broyage profond de la matière organique de polymère avec le composé métallique de transition en dessous de la température de transition vitreuse du polymère sous conditions anaérobies et
- le catalyseur à l'amide de titane supporté sur une matière organique au polymère étant activé par un composé de la formule générale
RₘAIY₃₋ₘ
avec
R - alkyle-, cycloalkyle-, aryle-, alkaryle-, aralkyle-, alkényle
Y - hydrogène-, halogène-, alkoxy-
m - valeur numérique de 1 à 3.

7. Catalyseur selon la revendication 6, **caractérisé par le fait que** la fabrication de ce catalyseur se fait avec les constituants exposés dans la revendication 6 par transformation effectuée dans l'ordre de succession qui y est indiqué.
